# EUROPÄISCHE PATENTANMELDUNG

(11) **EP 4 596 907 A1**
(43) Veröffentlichungstag der Anmeldung: **06.08.2025**
(21) Anmeldenummer: 25150732.3
(22) Anmeldetag: 08.01.2025
(51) Int. Cl.: F16C 17/02, F16C 17/04, F16C 33/10

(54) **AERODYNAMISCHES LAGER ZUR AXIALEN UND/ODER RADIALEN LAGERUNG EINER WELLE SOWIE VERFAHREN ZUR HERSTELLUNG EINES SOLCHEN LAGERS**

(30) Priorität: 31.01.2024 DE 102024102699
(71) Anmelder: ebm-papst Mulfingen GmbH & Co. KG, 74673 Mulfingen (DE)
(72) Erfinder: Dobrica, Dr. Mihai B., 69124 Heidelberg (DE)
(74) Vertreter: Staeger & Sperling Partnerschaftsgesellschaft mbB

(57) **Zusammenfassung**

Die Erfindung betrifft ein aerodynamisches Lager (1) zur axialen und/oder radialen Lagerung einer sich entlang einer Rotationsachse (A) erstreckenden Welle (2) für einen Turbokompressor, wobei das aerodynamische Lager (1) einen als Rotor bezeichenbaren ersten Lagerteil (10) und einen als Stator bezeichenbaren zweiten Lagerteil (20) aufweist, gegenüber welchem der erste Lagerteil (10) um die Rotationsachse (A) rotierbar ist, wobei das erste Lagerteil (10) und/oder das zweite Lagerteil (20) eine dem jeweils anderen Lagerteil (10, 20) zugewandte Lagerfläche (11, 21) aufweist, an welcher zwischen den Lagerteilen (10, 20) ein Luftpolster (3) zur aerodynamischen Lagerung erzeugbar ist, wobei die Lagerfläche (11, 21) eine Vielzahl von Vertiefungen (12) aufweist, welche jeweils einem vorbestimmten Längsverlauf (13) an der Lagerfläche (11, 21) folgen und zu einem vorbestimmten Muster angeordnet sind, wobei die Vertiefungen (12) über ihren jeweiligen Längsverlauf (13) an der Lagerfläche (11, 21) jeweils eine variierende Tiefe (T) aufweisen, welche durch einen auf eine vorbestimmte Zahl von Tiefenniveaus (31, 32, 33, 34) beschränkten Tiefenverlauf (30) bestimmt ist

## Beschreibung

Die Erfindung betrifft ein aerodynamisches Lager zur axialen und/oder radialen Lagerung einer sich entlang einer Rotationsachse erstreckenden Welle sowie Verfahren zur Herstellung eines solchen Lagers.

Aerodynamische Lager, welche auch als Gas- bzw. Luftlager bezeichnet werden können, sind im Stand der Technik seit langem bekannt. Dabei wird zwischen zwei Lagerungspartnern bzw. von diesen bereitgestellten Lagerflächen ein Gas- bzw. Luftpolster als Schmiermittel aufgebaut, sodass die Lagerungspartner bzw. Lagerteile im Wesentlichen berührungs- und reibungsfrei relativ zueinander rotieren können.

Zur Erhöhung der Stabilität bzw. der mit dem Lager maximal möglichen Drehzahlen ist zudem seit langem bekannt in die Lagerflächen Vertiefungen einzubringen, durch welche das Luftpolster insbesondere bei hohen Drehzahlen gleichmäßig und belastbar bleibt, sodass auch bei hohen Drehzahlen oder einer hohen Belastung des Lagers an den Lagerflächen eine für die Lagerung erforderliche Druckverteilung erhalten bleibt.

Die Vertiefungen können bei Axiallagern beispielsweise spiralartig und bei Radiallagern beispielsweise pfeilartig ausgebildet sowie jeweils zu einem Fischgrätenmuster angeordnet sein, sodass zueinander benachbarte Vertiefungen berührungslos ineinander eingreifen.

Aus Versuchen und Berechnungen hat sich ergeben, dass es weiter vorteilhaft ist, wenn die Vertiefungen entlang ihres jeweiligen Verlaufs eine variierende Tiefe aufweisen, wobei sich gezeigt hat, dass ein kontinuierlicher bzw. sprungfreier Tiefenverlauf mit gängigen Herstellungsmethoden, wie beispielsweise Lasern, nur aufwändig herstellbar ist.

Der Erfindung liegt deshalb die Aufgabe zugrunde, die vorgenannten Nachteile zu überwinden und ein einfach herzustellendes aerodynamisches Lager bereitzustellen, mit welchen hohe Drehzahlen erreichbar sind.

Diese Aufgabe wird durch die Merkmalskombination gemäß Patentanspruch 1 gelöst.

Erfindungsgemäß wird daher ein aerodynamisches Lager zur axialen und/oder radialen Lagerung einer sich entlang einer Rotationsachse erstreckenden Welle für einen Turbokompressor vorgeschlagen, bei welchem es sich vorzugsweise um einen Hochgeschwindigkeits-Turbokompressor handelt. Dabei kann der Turbokompressor als Radial-, Axial- oder Diagonalkompressor ausgebildet sein. Zwar können die im Weiteren erläuterten Merkmale auch ein Axiallager betreffen, jedoch beziehen sich diese vorzugsweise auf ein Radiallager. Entsprechend weist das aerodynamische Lager einen (mit der Welle rotierbaren oder integral durch die Welle gebildeten) als Rotor bezeichenbaren ersten Lagerteil und einen zweiten als Stator bezeichenbaren Lagerteil auf, gegenüber welchem der erste Lagerteil um die Rotationsachse rotierbar ist. Handelt es sich um ein Axiallager sind die Lagerteile vorzugsweise als zueinander benachbarte Lagerringe ausgebildet, von welchen ein Lagerring manschetten- bzw. flanschartig an der Welle fixiert ist. Bei einem Radiallager erstreckt sich einer der Lagerteile in Umfangsrichtung um die Welle und ist vorzugsweise integral durch die Welle gebildet, wobei der andere Lagerteil die Welle umläuft und hohlzylinderförmig ausgebildet ist. Unabhängig von einer Ausbildung als Axial- oder Radiallager ist daher jeweils vorgesehen, dass das erste Lagerteil und/oder das zweite Lagerteil eine dem jeweils anderen Lagerteil zugewandte Lagerfläche aufweist, an welcher zwischen den Lagerteilen ein Luftpolster bzw. Gaspolster zur aerodynamischen Lagerung erzeugbar ist, welches aufgrund seiner geringen Dicke auch beispielsweise als Luft- bzw. Gasfilm bezeichenbar ist. Zur einfachen Unterscheidbarkeit können die Lagerflächen im Weiteren auch als Rotor-Lagerfläche und Stator-Lagerfläche bezeichnet werden. Weiter weist die Lagerfläche bzw. beide Lagerflächen eine Vielzahl von Vertiefungen auf, welche jeweils einem vorbestimmten Längsverlauf an der Lagerfläche folgen und zu einem vorbestimmten Muster angeordnet sind. Dabei können die Vertiefungen jeweils aufgrund ihres vorbestimmten Längsverlaufs auch beispielsweise als Kanal oder Rinne bezeichnet werden. Die Vertiefungen weisen über ihren jeweiligen Längsverlauf an der Lagerfläche erfindungsgemäß jeweils eine relativ zu der Lagerfläche variierende Tiefe auf, welche durch einen Tiefenverlauf bestimmt ist, der auf eine vorbestimmte und endliche bzw. finite Zahl von insbesondere diskreten Tiefenniveaus beschränkt ist.

Der vorgeschlagene Tiefenverlauf kann daher in Unterscheidung zu einem als kontinuierlichen Tiefenverlauf bezeichenbaren Tiefenverlauf mit unendlich vielen (infiniten) Tiefenniveaus als diskreter Tiefenverlauf bezeichnet werden.

Durch die Beschränkung des Tiefenverlaufs eine vorbestimmte Zahl von vorbestimmten Tiefenniveaus wird die Herstellung deutlich vereinfacht, sodass ein solches Lager in einfacher Weise hergestellt und bereitgestellt werden kann.

Dabei kann der Tiefenverlauf in drei bis zwölf, insbesondere vier bis zehn Tiefenniveaus verlaufen bzw. die Zahl der Tiefenniveaus auf drei bis zwölf bzw. vier bis zehn beschränkt sein.

Ein jeweiliger Übergang zwischen den Tiefenniveaus erfolgt dabei vergleichsweise flach und entsprechend in einem Winkel kleiner 34°, weiter bevorzugt liegt der Winkel dabei zwischen 2° und 20°.

Der Übergang zwischen den Tiefenniveaus besitzt vorzugsweise eine Länge zwischen 10 und 100 µm, insbesondere zwischen 40 und 60 µm und weiter insbesondere 50 µm, wobei die einzelnen Tiefenniveaus bzw. deren Verlauf zwischen zwei Übergängen vorzugsweise eine Länge zwischen 1 und 20 µm, weiter vorzugsweise zwischen 2 und 10 µm aufweisen.

Wie im Rahmen der vorgeschlagenen Herstellungsverfahren noch erläutert, kann es sich bei dem erfindungsgemäßen Tiefenverlauf um einen nativen diskreten Tiefenverlauf oder um einen diskreten Tiefenverlauf als Annäherung an einen kontinuierlichen Tiefenverlauf handeln.

Unmittelbar benachbarte Tiefenniveaus können dabei bezüglich ihrer Tiefe einen Abstand zwischen 1 und 20 µm, insbesondere 2 und 10 µm zueinander aufweisen, wobei die Abstände zwischen den verschiedenen Tiefenniveaus unterschiedlich sein können, sodass also die durch die Tiefenniveaus erreichte Abstufung unregelmäßig sein kann.

Um insbesondere bei asymmetrischer Lastverteilung eine dennoch optimale Druckverteilung erzeugen zu können, kann zudem vorgesehen sein, dass der Tiefenverlauf bezüglich eines beispielsweise durch einen Scheitelpunkt gebildeten Mittelpunkts des Längsverlaufs symmetrisch oder asymmetrisch ist.

Obwohl die Tiefenverläufe der Vertiefungen grundsätzlich unterschiedlich sein können, ist vorzugsweise vorgesehen, dass die Tiefenverläufe aller Vertiefungen gleich sind.

Weiter ist zudem festzustellen, dass der jeweilige Längsverlauf bzw. die Längsverläufe der Vertiefungen ausschließlich aus geradlinig verlaufenden Abschnitten bestehen oder zumindest abschnittsweise gekrümmt sein können.

Dabei kann der Längsverlauf jeweils eine Pfeilform ausbilden, sodass die Vertiefungen jeweils zwei über einen Knick verbundene Abschnitte aufweisen.

Weiter können die Vertiefungen über ihren jeweiligen Längsverlauf an der Lagerfläche jeweils eine gleichbleibende oder variierende Breite aufweisen, wobei hinzuzufügen ist, dass auch eine kontinuierlich d.h. sprung- bzw. schrittfreie Variation der Breite durch moderne Herstellungsmethoden und beispielsweise Lasern anders als eine Variation der Tiefe meist problemfrei möglich ist.

Wie bereits erwähnt, sind die Vertiefungen vorzugsweise zu einem Fischgrätenmuster angeordnet, wobei hierunter vorzugsweise verstanden wird, dass die Vertiefungen in eine vorbestimmte Rotationsrichtung und im Falle eines Radiallagers in Umfangsrichtung um die Rotationsachse zumindest abschnittsweise überlappen und dadurch berührungsfrei ineinander eingreifen.

Ein weiterer Aspekt der Erfindung betrifft hierbei ein Verfahren zur Herstellung eines erfindungsgemäß vorgeschlagenen aerodynamischen Lagers. Durch Simulation und/oder Berechnung, beispielsweise mit numerischen Berechnungsverfahren oder Finite-Differenzen-Methode, wird zunächst ein kontinuierlicher Tiefenverlauf für eine optimale Druckverteilung an der Lagerfläche bei einer maximalen Rotationsgeschwindigkeit bestimmt. Anschließend wird der meist nicht oder nur schwer herstellbare kontinuierliche Verlauf durch Interpolation oder Approximation mit dem auf die vorbestimmte Zahl von Tiefenniveaus beschränkte Tiefenverlauf angenähert.

Alternativ zu dieser Bestimmung des diskreten Tiefenverlaufs über den kontinuierlichen Tiefenverlauf kann der diskrete Tiefenverlauf auch nativ bestimmt werden, indem also bereits bei der Simulation und/oder Berechnung, beispielsweise mit numerischen Berechnungsverfahren oder Finite-Differenzen-Methode, berücksichtigt wird, dass der Tiefenverlauf auf die vorbestimmte Zahl von Tiefenniveaus beschränkt ist, sodass nativ d.h. unmittelbar der auf die vorbestimmte Zahl von Tiefenniveaus beschränkte Tiefenverlauf für eine optimale Druckverteilung an der Lagerfläche bei einer maximalen Rotationsgeschwindigkeit bestimmt wird.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein als Radiallager ausgebildetes aerodynamisches Lager;
- Fig. 2: einen Tiefenverlauf der Vertiefungen des Lagers gemäß Figur 1.

Die Figuren sind beispielhaft schematisch. Gleiche Bezugszeichen in den Figuren weisen auf gleiche funktionale und/oder strukturelle Merkmale hin.

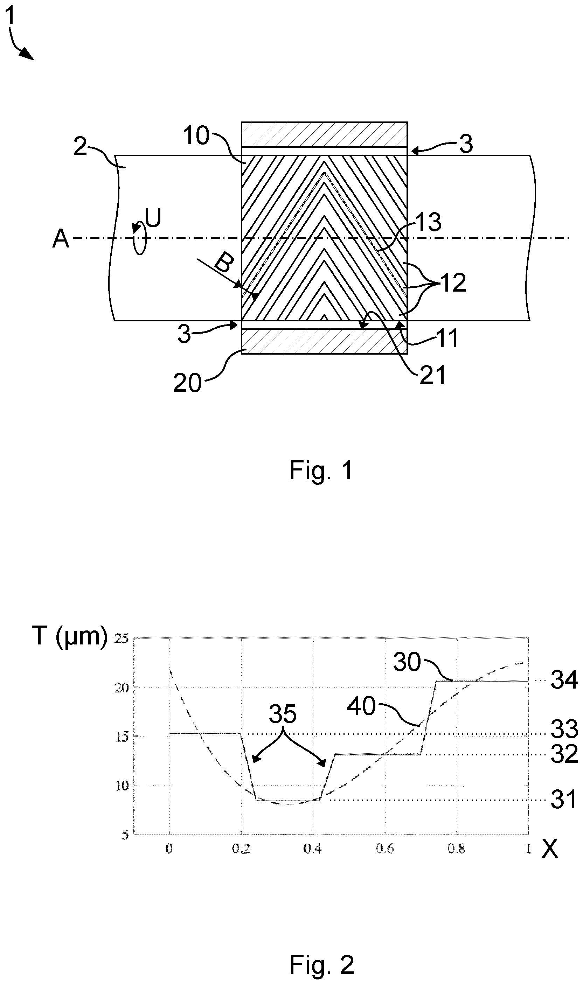

In Figur 1 ist ein aerodynamisches Lager 1 zur radialen Lagerung einer sich entlang der Rotationsachse A erstreckenden Welle 2 dargestellt, welches entsprechend auch als Radiallager 1 bezeichnet werden kann und insbesondere für den Einsatz in einem Hochgeschwindigkeits-Turbokompressor vorgesehen ist.

Entsprechend weist das Lager 1 zwei Lagerungspartner bzw. zwei Lagerteile 10, 20 auf. Der erste Lagerteil 10 ist als Rotor integral mit der Welle 2 ausgebildet und entsprechend um die Rotationsachse A rotierbar. Der zweite Lagerteil 20 ist als Stator ausgebildet und umgibt den ersten Lagerteil 10 in Umfangsrichtung U vollständig sowie ringförmig, sodass das in Figur 1 geschnitten dargestellte zweite Lagerteil 20 im Wesentlichen einem Hohlzylinder entspricht.

Die Lagerteile 10, 20 weisen jeweils eine Lagerfläche 11, 21, welche einander zugewandt sind, sodass sich bei einer Rotation des ersten Lagerteils 10 zwischen den Lagerflächen 11, 21 ein Luft- bzw. Gaspolster 3 ausbildet, welches als Schmier- bzw. Gleitmittel zur Lagerung dient.

Um an der Lagerfläche 11 des ersten Lagerteils 10 bzw. an der Rotor-Lagerfläche 11 des Rotors 10 auch bei hohen Drehzahlen eine optimierte Druckverteilung des Schmiermediums d.h. des Gases bzw. der Luft zu erreichen, sind auf der ersten Lagerfläche 11 eine Vielzahl von Vertiefungen 12 vorgesehen, welche sich jeweils pfeilförmig entlang eines Längsverlaufs 13 erstrecken. Entsprechend weisen die jeweils identischen Längsverläufe 13 der Vertiefungen 12 jeweils zwei geradlinige Abschnitte auf, welche durch einen Knick bzw. Scheitelpunkt miteinander verbunden sind.

Wie in Figur 1 gut zu erkennen, überlappen die pfeilförmigen Vertiefungen 12 in Umfangsrichtung U, sodass sich also ein Muster ähnlich einem Fischgrätenmuster ergibt.

Obgleich die Vertiefungen 12 vorliegend mit - die Rand- bzw. Knickbereiche ausgenommen - einer gleichbleibenden Breite B dargestellt sind, kann die Breite B über den Längsverlauf 13 auch variieren.

Neben der Breite B und dem Längsverlauf 13 wird die Druckverteilung an der Lagerfläche 11 auch insbesondere durch die Tiefe T der Vertiefung 12 beeinflusst, wobei sich gezeigt hat, dass die Druckverteilung der Luft bzw. des Gases im Druckpolster 3 insbesondere dadurch optimiert werden kann und entsprechend höhere Drehzahlen erreicht werden können, wenn die Tiefe T der Vertiefung 12 über deren Längsverlauf 13 nicht konstant bleibt, sondern variiert wird.

Durch Simulation und/oder Berechnung kann für die Variation der Tiefe T ein Tiefenverlauf bestimmt werden, durch welchen die Tiefe T der Vertiefung 12 entlang dem Längsverlauf 13 für die angestrebte optimierte Druckverteilung an der ersten Lagerfläche 11 festgelegt ist.

Wird dieser Tiefenverlauf jedoch als sich kontinuierlich ändernder d.h. als kontinuierlicher Tiefenverlauf 40 bezeichenbarer Verlauf bestimmt, ist dieser nur schwer oder nicht herstellbar.

Daher wird die Variation der Tiefe erfindungsgemäß auf bestimmte Tiefenniveaus 31, 32, 33, 34 beschränkt, sodass also die Tiefe T im Wesentlichen nur die durch die Tiefenniveaus 31, 32, 33, 34 bestimmten Werte einnehmen kann. Dadurch ergibt sich ein auf eine vorbestimmte Zahl von Tiefenniveaus 31, 32, 33, 34 beschränkter Tiefenverlauf 30, welcher auch als diskreter Tiefenverlauf 30 bezeichenbar ist.

In Figur 2 ist sowohl ein kontinuierlicher Tiefenverlauf 40 als auch ein diskreter Tiefenverlauf 30 über einen Längsverlauf 13 einer Vertiefung 12 angetragen, wobei die Position X entlang des Längsverlaufs 13 größenlos angegeben ist, sodass 0 einem Anfangspunkt des Längsverlaufs 13 und 1 einem End- oder Scheitelpunkt des Längsverlaufs 13 entspricht.

Grundsätzlich kann der auf die vorbestimmte Zahl von Tiefenniveaus 31, 32, 33, 34 beschränkte Tiefenverlauf 30 ausgehend von einem zuvor bestimmten kontinuierlichen Tiefenverlauf 40 bestimmt werden, sodass der diskrete Tiefenverlauf 30 einer Annäherung des kontinuierlichen Tiefenverlaufs 40 entspricht.

Alternativ kann unmittelbar bei der Berechnung bzw. Simulation zur Bestimmung des optimalen Verlaufs der Tiefe T berücksichtigt werden, dass die Tiefe T nur die vorbestimmten Tiefenniveaus 31, 32, 33, 34 einnehmen bzw. besitzen kann, sodass der diskrete Tiefenverlauf 30 unmittelbar bzw. nativ und ohne die vorhergehende Bestimmung eines kontinuierlichen Tiefenverlaufs 40 erfolgt.

Dabei geht aus Figur 2 auch eine Asymmetrie des Tiefenverlaufs 30 hervor, durch welche beispielsweise eine ebenfalls asymmetrische Lastverteilung auf das Lager 1 berücksichtigt werden kann.

Unabhängig davon gilt zu berücksichtigen, dass aufgrund der verwendbaren Fertigungsverfahren zwischen den einzelnen Tiefenniveaus 31, 32, 33, 34 jeweils ein steiler jedoch meist nicht zu den Tiefenniveaus 31, 32, 33, 34 orthogonaler Übergang 35 liegt, welcher einen Winkel zwischen 45° und 90° besitzt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Aerodynamisches Lager (1) zur axialen und/oder radialen Lagerung einer sich entlang einer Rotationsachse (A) erstreckenden Welle (2) für einen Turbokompressor,
wobei das aerodynamische Lager (1) einen als Rotor bezeichenbaren ersten Lagerteil (10) und einen als Stator bezeichenbaren zweiten Lagerteil (20) aufweist, gegenüber welchem der erste Lagerteil (10) um die Rotationsachse (A) rotierbar ist,
wobei das erste Lagerteil (10) und/oder das zweite Lagerteil (20) eine dem jeweils anderen Lagerteil (10, 20) zugewandte Lagerfläche (11, 21) aufweist, an welcher zwischen den Lagerteilen (10, 20) ein Luftpolster (3) zur aerodynamischen Lagerung erzeugbar ist,
wobei die Lagerfläche (11, 21) eine Vielzahl von Vertiefungen (12) aufweist, welche jeweils einem vorbestimmten Längsverlauf (13) an der Lagerfläche (11, 21) folgen und zu einem vorbestimmten Muster angeordnet sind,
wobei die Vertiefungen (12) über ihren jeweiligen Längsverlauf (13) an der Lagerfläche (11, 21) jeweils eine variierende Tiefe (T) aufweisen, welche durch einen auf eine vorbestimmte Zahl von insbesondere diskreten Tiefenniveaus (31, 32, 33, 34) beschränkten Tiefenverlauf (30) bestimmt ist.

2. Aerodynamisches Lager nach Anspruch 1,
wobei der Tiefenverlauf (30) in drei bis zwölf Tiefenniveaus (31, 32, 33, 34) verläuft.

3. Aerodynamisches Lager nach Anspruch 1 oder 2,
wobei ein jeweiliger Übergang (35) zwischen den Tiefenniveaus (31, 32, 33, 34) in einem Winkel kleiner 45° und insbesondere in einem Winkel zwischen 2° und 20° erfolgt.

4. Aerodynamisches Lager nach einem der vorhergehenden Ansprüche,
wobei unmittelbar benachbarte Tiefenniveaus (31, 32, 33, 34) einen Abstand zwischen 1 und 20 µm, insbesondere 2 und 10 µm zueinander aufweisen.

5. Aerodynamisches Lager nach einem der vorhergehenden Ansprüche,
wobei der Tiefenverlauf (30) bezüglich eines Mittelpunkts des Längsverlaufs (13) symmetrisch oder asymmetrisch ist.

6. Aerodynamisches Lager nach einem der vorhergehenden Ansprüche,
wobei der Längsverlauf (13) ausschließlich aus geradlinig verlaufenden Abschnitten besteht oder zumindest abschnittsweise gekrümmt ist und/oder
wobei der Längsverlauf (13) jeweils eine Pfeilform ausbildet, sodass die Vertiefungen (12) jeweils zwei über einen Knick verbundene Abschnitte aufweisen.

7. Aerodynamisches Lager nach einem der vorhergehenden Ansprüche,
wobei die Vertiefungen (12) über ihren jeweiligen Längsverlauf (13) an der Lagerfläche (11, 21) jeweils eine gleichbleibende oder variierende Breite (B) aufweisen.

8. Aerodynamisches Lager nach einem der vorhergehenden Ansprüche,
wobei die Vertiefungen (12) zu einem Fischgrätenmuster angeordnet sind und/oder
in eine vorbestimmte Rotationsrichtung um die Rotationsachse (A) zumindest abschnittsweise überlappen.

9. Verfahren zur Herstellung eines aerodynamisches Lager nach einem der vorhergehenden Ansprüche,
wobei durch Simulation und/oder Berechnung ein kontinuierlicher Tiefenverlauf (40) für eine optimale Druckverteilung an der Lagerfläche (11, 21) bei einer maximalen Rotationsgeschwindigkeit bestimmt wird und
wobei durch Interpolation oder Approximation der auf die vorbestimmte Zahl von Tiefenniveaus (31, 32, 33, 34) beschränkte Tiefenverlauf (30) bestimmt wird, welcher den kontinuierlichen Tiefenverlauf (40) annähert.

10. Verfahren zur Herstellung eines aerodynamisches Lager nach einem der vorhergehenden Ansprüche 1 bis 8,
wobei durch Simulation und/oder Berechnung der auf die vorbestimmte Zahl von Tiefenniveaus (31, 32, 33, 34) beschränkte Tiefenverlauf (30) für eine optimale Druckverteilung an der Lagerfläche (11, 21) bei einer maximalen Rotationsgeschwindigkeit bestimmt wird.
